# EUROPÄISCHE PATENTANMELDUNG

(11) **EP 1 536 210 A2**
(43) Veröffentlichungstag der Anmeldung: **01.06.2005**
(21) Anmeldenummer: 04024764.5
(22) Anmeldetag: 18.10.2004
(51) Int. Cl.: G01F 1/58, G01F 25/00, G01D 18/00

(54) **Verfahren zum Betreiben eines Messgeräts**

(30) Priorität: 27.11.2003 DE 10356008
(71) Anmelder: KROHNE MESSTECHNIK GMBH & CO. KG, 47058 Duisburg (DE)
(72) Erfinder: Brockhaus, Helmut, Dr., 46537 Dinslaken (DE)
(74) Vertreter: Gesthuysen, Hans Dieter, Dipl.-Ing.

(57) **Zusammenfassung**

Dargestellt und beschrieben ist ein Verfahren zum Betreiben eines Meßgeräts, wobei das Meßgerät mit einer Mehrzahl von Diagnosefunktionen versehen ist. Erfindungsgemäß ist eine derartige Ablaufsteuerung zur Durchführung der Diagnosefunktionen vorgesehen, daß der normale Meßbetrieb des Meßgeräts unterbrochen wird, während der Unterbrechung des normalen Meßbetriebs eine erste Diagnosefunktion durchgeführt wird, der normale Meßbetrieb nach Durchführung der ersten Diagnosefunktion wieder aufgenommen wird, der normale Meßbetrieb des Meßgeräts wieder unterbrochen wird und während der Unterbrechung des normalen Meßbetriebs eine zweite Diagnosefunktion durchgeführt wird. Auf diese Weise ist auch eine Vielzahl von Diagnosefunktionen einfach und effizient in den Betrieb eines Meßgeräts, wie eines magnetisch-induktiven Durchflußmeßgeräts, integrierbar.

## Beschreibung

Die Erfindung betrifft ein Verfahren zum Betreiben eines Meßgeräts, wobei das Meßgerät mit einer Mehrzahl von Diagnosefunktionen versehen ist.

Aus dem Stand der Technik sind Meßgeräte, wie magnetisch-induktive Meßgeräte, bekannt, die mit verschiedenen Diagnosefunktionen versehen sind. Mit diesen Diagnosefunktionen soll der Betrieb der Meßgeräte geprüft werden, um deren Zuverlässigkeit zu verbessern. Bekannt sind dabei einerseits Diagnosefunktionen, die keinen Einfluß auf den Meßbetrieb haben, und andererseits solche, die den normalen Meßbetrieb stören, also nur bei ausgeschaltetem Meßbetrieb durchgeführt werden können.

Es ist die Aufgabe der Erfindung, ein Verfahren zum Betreiben eines Meßgeräts anzugeben, mit dem die angesprochenen Diagnosefunktionen einfach und effektiv durchgeführt werden können.

Ausgehend von dem eingangs beschriebenen Verfahren zum Betreiben eines Meßgeräts ist die zuvor hergeleitete und aufgezeigte Aufgabe dadurch gelöst, daß eine derartige Ablaufsteuerung zur Durchführung der Diagnosefunktionen erfolgt, daß der normale Meßbetrieb des Meßgeräts unterbrochen wird, während der Unterbrechung des normalen Meßbetriebs eine erste Diagnosefunktion durchgeführt wird, der normale Meßbetrieb nach Durchführung der ersten Diagnosefunktion wieder aufgenommen wird, der normale Meßbetrieb des Meßgeräts wieder unterbrochen wird und während der Unterbrechung des normalen Meßbetriebs eine zweite Diagnosefunktion durchgeführt wird.

Erfindungswesentlich ist also, daß der Betrieb des Meßgeräts zur Durchführung von Diagnosefunktionen einer Ablaufsteuerung unterworfen wird, nämlich derart, daß der normale Meßbetrieb unterbrochen wird und in diesen Unerbrechungen nacheinander voneinander verschiedene Diagnosefunktionen durchgeführt werden. Bei entsprechender Ausgestaltung der erfindungsgemäßen Ablaufsteuerung kann sichergestellt werden, daß sich unterschiedliche Diagnosefunktionen nicht gegenseitig stören oder beeinflussen und daß auch der normale Meßbetrieb durch die Diagnosefunktionen nicht in größerem Maße beeinträchtigt wird.

Gemäß einer bevorzugten Weiterbildung der Erfindung kann insbesondere vorgesehen sein, daß der normale Meßbetrieb nach Durchführung der zweiten Diagnosefunktion wieder aufgenommen wird, der normale Meßbetrieb des Meßgeräts wieder unterbrochen wird und während der Unterbrechung des normalen Meßbetriebs die erste Diagnosefunktion oder eine dritte Diagnosefunktion durchgeführt wird. Die verschiedenen Diagnosefunktionen können also nach unterschiedlichen Zeiten wiederholt werden, so daß insgesamt grundsätzlich eine beliebige Anzahl von Diagnosefunktionen in die erfindungsgemäße Ablaufsteuerung integriert werden kann.

Die Wiederholung von Diagnosefunktionen ist grundsätzlich beliebig, muß insbesondere nämlich auch nicht periodisch sein. Ist jedoch eine sich periodisch wiederholende Durchführung der Diagnosefunktion vorgesehen, so können grundsätzlich alle Diagnosefunktionen mit der selben Frequenz wiederholt werden. Gemäß einer bevorzugten Weiterbildung der Erfindung ist jedoch vorgesehen, daß die einzelnen Diagnosefunktionen mit unterschiedlichen Frequenzen periodisch wiederholt werden. Auf diese Weise können besonders wichtige Diagnosefunktionen öfter wiederholt werden. Dabei kann einerseits vorgesehen sein, daß die Wiederholfrequenz für die Diagnosefunktionen voreingestellt ist. Andererseits kann die Wiederholfrequenz für die Diagnosefunktionen aber auch vom Verwender des Meßgeräts einstellbar sein.

Grundsätzlich kann die jeweilige Dauer der Unterbrechung des normalen Meßbetriebs für alle Diagnosefunktionen gleich sein. Gemäß einer bevorzugten Weiterbildung der Erfindung ist jedoch vorgesehen, daß die jeweilige Dauer der Unterbrechung des normalen Meßbetriebs in Abhängigkeit von der Art der durchgeführten Diagnosefunktion gesteuert wird. Die Unterbrechungen des normalen Meßbetriebs müssen also nicht für alle Diagnosefunktionen gleich lang sein, so daß z. B. sehr schnell durchzuführende Diagnosefunktionen auch nur mit einer sehr kurzen Unterbrechung des normalen Meßbetriebs einhergehen. Insbesondere ist gemäß einer bevorzugten Weiterbildung der Erfindung vorgesehen, daß die jeweilige Dauer der Unterbrechung des normalen Meßbetriebs im Bereich von 10 bis 200 ms gesteuert wird. Weiterhin ist gemäß einer bevorzugten Weiterbildung der Erfindung vorgesehen, daß der zeitliche Abstand zwischen zwei Unterbrechungen des normalen Meßbetriebs im Bereich von 1 bis 100 s gesteuert wird.

Während der Unterbrechung des normalen Meßbetriebs kann grundsätzlich vorgesehen sein, daß kein Meßwert ausgegeben wird. Gemäß einer bevorzugten Weiterbildung der Erfindung ist jedoch vorgesehen, daß während einer Unterbrechung des normalen Meßbetriebs als Meßwert der zuletzt ermittelte Meßwert ausgegeben wird. Alternativ dazu ist gemäß einer bevorzugten Weiterbildung der Erfindung vorgesehen, daß während einer Unterbrechung des normalen Meßbetriebs ein Hilfsmeßbetrieb erfolgt, im Rahmen dessen ein Meßwert mit geringerer Genauigkeit ermittelt und ausgegeben wird.

Bezüglich dieses Hilfsmeßbetriebs kann z. B. vorgesehen sein, daß für den eigentlichen Meßbetrieb weniger Leistung zur Verfügung steht, was mit einem geringeren Signal und damit einem verschlechterten Signal-zu-Rausch-Verhältnis einhergeht. Andererseits kann es während des Hilfsmeßbetriebs, zu dem parallel ja die Diagnosefunktion durchgeführt wird, zu einer Beeinflussung des Meßwerts durch die Diagnosefunktion kommen.

Insbesondere ist in diesem Zusammenhang gemäß einer bevorzugten Weiterbildung der Erfindung vorgesehen, daß die Einleitung eines Hilfsmeßbetriebs während einer Unterbrechung des normalen Meßbetriebs in Abhängigkeit von der Art der Diagnosefunktion gesteuert wird. Diese Ausgestaltung des Verfahrens trägt dem Rechnung, daß manche Diagnosefunktionen aufgrund ihrer Wechselwirkung mit Einrichtungen des Meßgeräts jegliche Art von Meßbetrieb und damit auch einen Hilfsmeßbetrieb ausschließen. Um damit jedoch nicht gänzlich auf einen Hilfsmeßbetrieb während der Unterbrechungen des normalen Meßbetriebs verzichten zu müssen, wird bei solchen Diagnosefunktionen, die grundsätzlich einen Meßbetrieb zulassen, individuell ein Hilfsmeßbetrieb gestartet.

Die Ergebnisse der einzelnen Diagnosefunktionen, also die dabei ermittelten Werte, können direkt ausgegeben werden. Gemäß einer bevorzugten Weiterbildung der Erfindung ist jedoch vorgesehen, daß die Ergebnisse der einzelnen Diagnosefunktionen zeitlich gemittelt werden. Auf diese Weise sind nur kurze Unterbrechungen des normalen Meßbetriebs erforderlich, und es wird die Verläßlichkeit der ermittelten Diagnosewerte erhöht. Dabei können Diagnosefunktionen, die mehrere Mittelungen erfordern, öfter wiederholt werden als andere.

Schließlich ist gemäß einer bevorzugten Weiterbildung der Erfindung vorgesehen, daß die gesamte Ablaufsteuerung insgesamt periodisch wiederholt wird. Im übrigen kann die ganze Ablaufsteuerung, also alle Diagnosefunktionen, deaktivierbar sein, wobei auch vorgesehen sein kann, daß nur einzelne Diagnosefunktionen deaktiviert werden. Dies kann einerseits vom Verwender selbst, typischerweise direkt am Meßgerät, oder über einen Steuereingang elektronisch durch ein Leitsystem erfolgen.

Gemäß einer bevorzugten Weiterbildung der Erfindung ist die Verwendung des zuvor beschriebenen Verfahrens insbesondere für ein magnetisch-induktives Durchflußmeßgerät vorgesehen. Magnetisch-induktive Durchflußmeßgeräte sind aus dem Stand der Technik gut bekannt und weisen typischerweise ein von einem strömenden Medium durchflossenes Meßrohr, zwei entlang einer zumindest im wesentlich senkrecht zur Meßrohrachse verlaufenden Verbindungslinie angeordnete Meßelektroden und zwar ein zumindest im wesentlichen senkrecht zur Meßrohrachse und senkrecht zur Verbindungslinie der Meßelektroden verlaufendes Magnetfeld erzeugende Magnetspulen auf. Zur Bestimmung des Durchflusses des strömenden Mediums durch das Meßrohr wird an einer oder an beiden Meßelektroden jeweils eine Spannung gegenüber einem Referenzpotential abgegriffen.

Das Prinzip des magnetisch-induktiven Durchflußmeßverfahrens beruht auf der elektrodynamischen Induktion: Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Innerhalb des Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über die Meßelektroden abgreifbaren Meßspannung.

Im eigentlichen Durchflußmeßbetrieb wird bei einem magnetisch-induktiven Durchflußmeßgerät im allgemeinen das Magnetfeld zeitlich alternierend umgeschaltet. Dazu sind unterschiedliche Vorgehensweisen bekannt, wie die Verwendung eines Wechselfelds oder eines geschalteten Gleichfelds. Möglich ist auch die Verwendung eines pulsierenden Gleichfelds, das dadurch erhalten wird, daß die Magnetspulen des Magneten nur periodenweise mit einem zeitlich rechteckförmigen, immer die gleiche Polarität aufweisenden Strom versorgt werden. Ein Verfahren, bei dem der Feldstrom periodisch umgepolt wird, ist jedoch bevorzugt, da durch die Änderung der Polarität des Magnetfelds Störgrößen, wie elektrochemische Störgrößen, unterdrückt werden können.

Bei magnetisch-induktiven Durchflußmeßgeräten kann es nun zu einer Vielzahl von Störungen kommen, die einen verläßlichen Meßbetrieb negativ beeinflussen können. Als ein Beispiel sei nur genannt, daß sich auf in galvanisch leitendem Kontakt mit dem strömenden Medium stehenden Elektroden Abscheidungen aus dem Medium absetzen können, so daß es zu belegten Elektroden kommt, die das Meßergebnis verfälschen.

Bei einem solchen magnetisch-induktiven Durchflußmeßgerät können nun als Diagnosefunktionen, die, wie oben beschrieben, einer erfindungsgemäßen Ablaufsteuerung unterworfen werden, unter anderem folgende Funktionen vorgesehen sein: eine Elektrodenimpedanzmessung durch einen Teststrom auf die Elektroden des magnetisch-induktiven Durchflußmeßgeräts, eine Linearitätsprüfung durch gezielte Änderung des Feldstroms, eine Addition eines bekannten Testsignals zu dem normalen Elektrodensignal zur Kontrolle der Vorverstärkung oder/und der A/D-Wandlung und die Erzeugung eines inhomogenen Magnetfelds. Dazu sei angemerkt, daß die Erzeugung eines inhomogenen Magnetfelds z. B. durch einander gegenüberliegende, gegensinnig stromdurchflossene Magnetspulen erzielt werden kann.

Bei der Verwendung der erfindungsgemäßen Ablaufsteuerung für ein magnetisch-induktives Durchflußmeßgerät kann bezüglich der zeitlichen Steuerung gemäß einer bevorzugten Weiterbildung der Erfindung insbesondere vorgesehen sein, daß der zeitliche Abstand zwischen zwei Unterbrechungen des normalen Meßbetriebs des magnetisch-induktiven Durchflußmeßgeräts derart gesteuert wird, daß der zeitliche Abstand einem Vielfachen der halben Periodendauer des Magnetfelds entspricht.

Im einzelnen gibt es nun eine Vielzahl von Möglichkeiten, das erfindungsgemäße Verfahren auszugestalten und weiterzubilden. Dazu wird auf die dem Patentanspruch 1 nachgeordneten Patentansprüche sowie auf die nachfolgende Beschreibung eines bevorzugten Ausführungsbeispiels der Erfindung unter Bezugnahme auf die Zeichnung verwiesen. In der Zeichnung zeigt
- Fig. 1: schematisch eine Ablaufsteuerung gemäß einem bevorzugten Ausführungsbeispiel der Erfindung und
- Fig. 2: schematisch ein magnetisch-induktives Durchflußmeßgerät, das mit einer Ablaufsteuerung gemäß einem bevorzugten Ausführungsbeispiel der Erfindung betrieben wird.

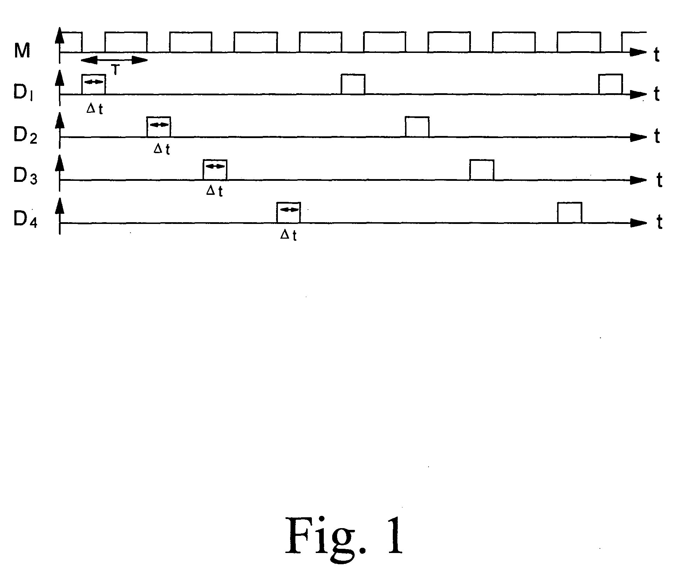

In Fig. 1 ist schematisch einerseits die Steuerung des normalen Meßbetriebs M und andererseits die Steuerung von vier unterschiedlichen Diagnosefunktionen D₁, D₂, D₃ und D₄ dargestellt. Der normale Meßbetrieb wird regelmäßig unterbrochen, wobei in den Unterbrechungen des normalen Meßbetriebs nacheinander die einzelnen Diagnosefunktionen durchgeführt werden. Vorliegend ist dargestellt, daß die Diagnosefunktionen alle mit der gleichen Frequenz wiederholt werden und daß die jeweilige Unterbrechung des normalen Meßbetriebs für die einzelnen Diagnosefunktionen immer gleich lang ist. Wie weiter oben schon ausgeführt, ist dies jedoch nicht zwingend erforderlich, vielmehr können einerseits die Wiederholfrequenzen für die einzelnen Diagnosefunktionen und andererseits die jeweiligen Dauern der Unterbrechungen des normalen Meßbetriebs für die einzelnen Diagnosefunktionen unterschiedlich sein, nämlich an den jeweiligen Bedarf angepaßt sein.

Die regelmäßige Unterbrechung des normalen Meßbetriebs entspricht der regelmäßigen Wiederholung, nämlich Wiederaufnahme, des normalen Meßbetriebs mit einer vorbestimmten Frequenz *f.* Dieser Frequenz *f* entspricht die Periodendauer *T =* 1/*f*, wobei vorliegend vorgesehen ist, daß die Periodendauer *T* wesentlich größer ist als die jeweilige Dauer Δt der Unterbrechung des Meßbetriebs für die Durchführung einer Diagnosefunktion. Konkret gilt bei dem hier beschriebenen bevorzugten Ausführungsbeispiel der Erfindung, daß die Periodendauer T für den normalen Meßbetrieb im Bereich zwischen 1 und 100 s liegt, während die Dauer Δt der Unterbrechung des normalen Meßbetriebs für die Durchführung einer Diagnosefunktion lediglich im Bereich von 10 bis 200 ms liegt. Die in Fig. 1 gezeigten Verhältnisse entsprechen also nicht den tatsächlich gewählten Verhältnissen der Zeitdauern.

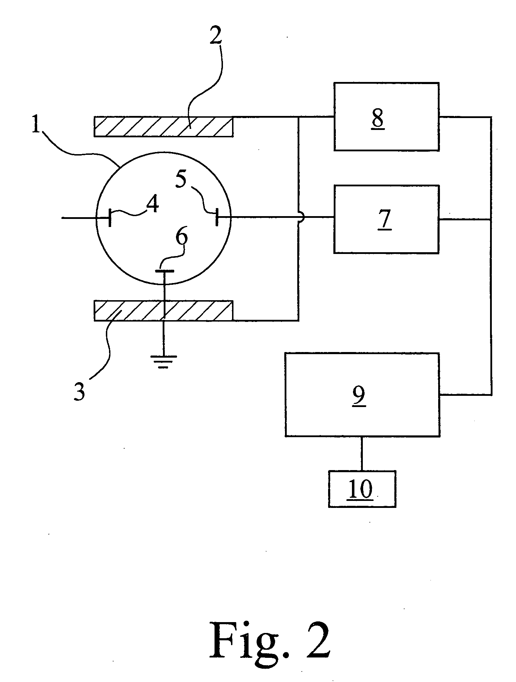

Aus Fig. 2 ist schematisch ein magnetisch-induktives Durchflußmeßgerät ersichtlich, daß mit einer Ablaufsteuerung gemäß einem bevorzugten Ausführungsbeispiel der Erfindung betrieben wird. Das magnetisch-induktive Durchflußmeßgerät weist ein Meßrohr 1 auf, durch das ein nicht weiter dargestelltes, elektrisch leitfähiges Medium strömt. Ein im wesentlichen senkrecht zur Durchflußrichtung des Mediums verlaufendes Magnetfeld wird mit Hilfe von zwei Magnetspulen 2, 3 erzeugt. Mit Hilfe von zwei Meßelektroden 4, 5, die derart angeordnet sind, daß ihre Verbindungslinie im wesentlichen senkrecht zur Durchflußrichtung und senkrecht zur Magnetfeldrichtung verläuft, kann die induzierte Spannung abgegriffen werden. Darüber hinaus ist eine Referenzelektrode 6 vorgesehen, die geerdet ist.

Bei dem in Fig. 2 gezeigten magnetisch-induktiven Durchflußmeßgerät sind zwei Diagnosefunktionen implementiert, nämlich einerseits das Anlegen eines Teststroms auf die Elektroden 4, 5 und andererseits eine Linearitätsprüfung durch gezielte Änderung des durch die Magnetspulen 2, 3 fließenden Feldstroms. Dazu ist einerseits eine Stromversorgungs- und Meßeinrichtung 7 vorgesehen, mit der die beiden Meßelektroden 4, 5 gegenüber einem Referenzpotential mit einem Wechselstrom beaufschlagt werden können und die Impedanz der mit dem Wechselstrom beaufschlagten Meßelektrode 4, 5 gemessen werden kann. Der Einfachheit halber ist dies jedoch lediglich für die rechte Meßelektrode 5 dargestellt.

Außerdem ist eine Magnetspulenversorgung 8 vorgesehen, mittels derer die Magnetspulen 2, 3 mit einem vorbestimmten Feldstrom versorgt werden. Durch Erhöhung des Feldstroms um einen vorbestimmten Faktor wird auch das Magnetfeld um diesen Faktor erhöht, was seinerseits eine Erhöhung der induzierten Spannung ebenfalls um diesen Faktor erwarten läßt. Auf diese Weise ist mit Hilfe der Magnetspulenversorgung 8 über die von der Stromversorgungs- und Meßeinrichtung 7 erfaßte induzierte Spannung eine Linearitätsprüfung des magnetisch-induktiven Durchflußmeßgeräts möglich. Bezüglich der Verwendung eines Teststroms auf der Elektroden 4, 5 des magnetisch-induktiven Durchflußmeßgeräts und bezüglich der Linearitätsprüfung durch gezielte Änderung des Feldstroms der Feldspulen 2, 3 wird explizit auf den Stand der Technik verwiesen, nämlich auf die DE 101 18 002 A1 und die DE 100 64 738 A1.

Die beiden Diagnosefunktionen ― Teststrom einerseits und Linearitätsprüfung andererseits ― werden nun zu solchen Zeiten durchgeführt, zu denen der normale Meßbetrieb des magnetisch-induktiven Durchflußmeßgeräts unterbrochen wird. Eine Unterbrechung des normalen Meßbetriebs des magnetisch-induktiven Durchflußmeßgeräts erfolgt vorliegend in einem zeitlichen Abstand, der einem Vielfachen der halben Periodendauer des Magnetfelds entspricht. Dabei wird abwechselnd einerseits ein Teststrom angelegt und andererseits die Linearitätsprüfung durchgeführt. Die Zeitdauern für die jeweiligen Unterbrechungen entsprechen im wesentlichen den Zeitdauern, die für die Durchführung der Diagnosefunktionen erforderlich sind. Das heißt, daß die Diagnosefunktion umgehend nach Unterbrechung des normalen Meßbetriebs aufgenommen wird und der normale Meßbetrieb umgehend dann fortgesetzt wird, wenn die Diagnosefunktion beendet ist.

Die entsprechende Ablaufsteuerung wird gemäß dem vorliegend beschriebenen bevorzugten Ausführungsbeispiel der Erfindung von einer Ablaufsteuerund Auswerteeinrichtung 9 übernommen. Dieser werden auch die Ergebnisse der Diagnosefunktionen zugeführt, so daß dort eine zeitliche Mittelung der Ergebnisse erfolgen kann bevor diese Ergebnisse über eine Ausgabeeinrichtung 10, wie eine Anzeige- oder eine Busschnittstelle, ausgegeben werden. Im Ergebnis werden damit die Diagnosefunktionen auf einfache und effiziente Weise in den Betrieb des magnetisch-induktiven Durchflußmeßgeräts integriert, ohne den normalen Meßbetrieb in größerem Umfang zu beeinträchtigen.

## Patentansprüche

1. Verfahren zum Betreiben eines Meßgeräts, wobei das Meßgerät mit einer Mehrzahl von Diagnosefunktionen versehen ist, **dadurch gekennzeichnet, daß** eine derartige Ablaufsteuerung zur Durchführung der Diagnosefunktion erfolgt, daß der normale Meßbetrieb des Meßgeräts unterbrochen wird, während der Unterbrechung des normalen Meßbetriebs eine erste Diagnosefunktion durchgeführt wird, der normale Meßbetrieb nach Durchführung der ersten Diagnosefunktion wieder aufgenommen wird, der normale Meßbetrieb des Meßgeräts wieder unterbrochen wird und während der Unterbrechung des normalen Meßbetriebs eine zweite Diagnosefunktion durchgeführt wird.

2. Verfahren nach Anspruch 1, **dadurch gekennzeichnet, daß** der normale Meßbetrieb nach Durchführung der zweiten Diagnosefunktion wieder aufgenommen wird, der normale Meßbetrieb des Meßgeräts wieder unterbrochen wird und während der Unterbrechung des normalen Meßbetriebs die erste Diagnosefunktion oder eine dritte Diagnosefunktion durchgeführt wird.

3. Verfahren nach Anspruch 1 oder 2, **dadurch gekennzeichnet, daß** die einzelnen Diagnosefunktionen mit unterschiedlichen Frequenzen periodisch wiederholt werden.

4. Verfahren nach einem der Ansprüche 1 bis 3, **dadurch gekennzeichnet, daß** die jeweilige Dauer der Unterbrechung des normalen Meßbetriebs in Abhängigkeit von der Art der durchgeführten Diagnosefunktion gesteuert wird.

5. Verfahren nach einem der Ansprüche 1 bis 4, **dadurch gekennzeichnet, daß** während einer Unterbrechung des normalen Meßbetriebs als Meßwert der zuletzt ermittelte Meßwert ausgegeben wird.

6. Verfahren nach einem der Ansprüche 1 bis 5, **dadurch gekennzeichnet, daß** während einer Unterbrechung des normalen Meßbetriebs ein Hilfsmeßbetrieb erfolgt, im Rahmen dessen ein Meßwert mit geringerer Genauigkeit ermittelt und ausgegeben wird.

7. Verfahren nach Anspruch 6, **dadurch gekennzeichnet, daß** die Durchführung des Hilfsmeßbetriebs in Abhängigkeit von der Art der Diagnosefunktion gesteuert wird.

8. Verfahren nach einem der Ansprüche 1 bis 7, **dadurch gekennzeichnet, daß** die Ergebnisse der einzelnen Diagnosefunktionen zeitlich gemittelt werden.

9. Verfahren nach einem der Ansprüche 1 bis 8, **dadurch gekennzeichnet, daß** die gesamte Ablaufsteuerung periodisch wiederholt wird.

10. Verwendung des Verfahren nach einem der Ansprüche 1 bis 9 für ein magnetisch-induktives Durchflußmeßgerät.

11. Verwendung nach Anspruch 10, **dadurch gekennzeichnet, daß** die Diagnosefunktionen ausgewählt sind aus einer Gruppe, aufweisend eine Elektrodenimpedanzmessung durch einen Teststrom auf die Elektroden (4, 5) des magnetisch-induktiven Durchflußmeßgeräts, eine Linearitätsprüfung durch gezielte Änderung des Feldstroms, eine Addition eines bekannten Testsignals zu dem normalen Elektrodensignal zur Kontrolle der Vorverstärkung oder/und der A/D-Wandlung und die Erzeugung eines inhomogenen Magnetfelds.

12. Verwendung nach Anspruch 10 oder 11, **dadurch gekennzeichnet, daß** der zeitliche Abstand zwischen zwei Unterbrechungen des normalen Meßbetriebs des magnetisch-induktiven Durchflußmeßgeräts derart gesteuert wird, daß der zeitliche Abstand einem Vielfachen der halben Periodendauer des Magnetfelds entspricht.

13. Meßgerät, insbesondere magnetisch-induktives Durchflußmeßgerät, mit einer Ablaufsteuerung zur Durchführung des Verfahrens nach einem der Ansprüche 1 bis 12.
